# FASCICULE DE BREVET EUROPEEN

(11) **EP 2 387 016 B1**
(45) Date de publication et mention de la délivrance du brevet: **06.01.2016**
(21) Numéro de dépôt: 11164448.0
(22) Date de dépôt: 02.05.2011
(51) Int. Cl.: G08B 21/24, H04L 12/28, E06B 9/32

(54) **Procédé de localisation d'une unité de commande d'un actionneur de manoeuvre d'un element de couverture de fenêtre**
Method for positioning a unit for controlling an actuator for operating a window-covering element
Verfahren zur Lokalisierung einer Steuereinheit eines Stellglieds zur Handhabung eines Abdeckelements eines Fensters

(30) Priorité: 12.05.2010 FR 1053731
(43) Date de publication de la demande: 16.11.2011
(73) Titulaire: Somfy SAS, 74300 Cluses (FR)
(72) Inventeur: Cheron, Eric, 74440, Taninges (FR)
(74) Mandataire: Novaimo

(56) Documents cités:
- EP-A2- 1 213 692
- US-A1- 2002 093 297
- US-A1- 2005 017 869
- US-A1- 2005 225 682

## Description

L'invention concerne un système de commande pour élément motorisé de couverture de fenêtre (« window covering »), tel un rideau motorisé ou un store vénitien, notamment destiné à être installé dans une chambre d'hôtel ou dans tout local d'un bâtiment, dans lequel un utilisateur découvre seul les équipements mis à sa disposition, par exemple une salle de conférence.

Dans une chambre d'hôtel, tant que la chambre n'est pas occupée par un nouvel utilisateur ou en absence de celui-ci, les lumières sont éteintes et la climatisation est réduite, afin d'économiser l'énergie. De nombreux documents de l'art antérieur, comme les brevets US 4,319,712, US 4,223,301 ou US 5,620,137 décrivent cette situation.

Une action de l'utilisateur sur la serrure de la chambre d'hôtel, ou de mise en place d'une carte dans un support, place la chambre dans un mode d'accueil (allumage des lumières, activation des prises électriques, ajustement de l'air conditionné) alors qu'une action inverse place la chambre dans un mode d'économie d'énergie.

Afin de mieux accueillir l'utilisateur, il est possible de prévoir de plus un scénario personnalisé de gestion des éclairages, comme décrit dans la demande de brevet WO2008/032237.

Cependant, pour les mêmes raisons d'économie d'énergie et pour protéger les décorations intérieures des rayons ultraviolets, un rideau motorisé est avantageusement déployé automatiquement en absence de l'utilisateur de la chambre ou tant que la chambre n'est pas occupée par un nouvel utilisateur. Si ce dernier arrive en cours de journée, une de ses premières actions sera de chercher à ouvrir le rideau. Or, s'il existe des conventions ou habitudes concernant la localisation des points de commande d'éclairage (tête de lit, entrée de salle de bains, etc.), ce n'est pas le cas des points de commande de rideau motorisé, que ces points de commande soient de type fixe ou de type nomade.

La localisation du point de commande d'un rideau motorisé pose donc un problème, qui a obligé certains fabricants de dispositifs de motorisation de rideaux à prévoir un mode de fonctionnement dans le cas où l'utilisateur cherche à tirer lui-même le rideau, par méconnaissance de l'existence d'un point de commande. Par exemple, le brevet JP 3 368 606 décrit un dispositif de détection d'une traction manuelle de l'utilisateur sur le rideau. Cette traction étant détectée, le moteur du rideau motorisé se met automatiquement en marche et termine la manoeuvre débutée par l'utilisateur.

De nombreux documents tels le brevet US 7,436,460 décrivent par ailleurs des moyens de localisation de télécommandes nomades de téléviseurs comprenant un activateur de recherche disposé sur le téléviseur et un générateur de signal de localisation (sonore ou lumineux) disposé sur la télécommande nomade. Il en est de même par exemple pour la recherche d'un combiné de téléphone portable à partir de la base du téléphone portable. Le combiné est muni d'un générateur de signal de localisation, tandis que la base est munie d'un activateur de recherche, par exemple un bouton poussoir relié au circuit d'émission de la base. Dans chaque cas, l'utilisateur agit sur l'activateur de recherche pour retrouver l'objet nomade.

Or ces documents supposent l'existence d'un objet connu et déjà localisé (le téléviseur, la base du téléphone...) sur lequel l'utilisateur distingue sans ambiguïté le moyen activateur de recherche, alors que, dans le cas du rideau motorisé, il n'existe pas un tel objet ou celui-ci, s'il s'agit du moteur, est soigneusement dissimulé et difficilement accessible.

Le document US 2002/93297 décrit un système de store motorisé.

Le document EP 1 213 692 décrit un procédé permettant à un utilisateur de connaître le matériel à sa disposition lorsqu'il pénètre dans un bureau.

Les documents de l'art antérieur ne permettent pas de résoudre de manière simple et intuitive le problème de la localisation d'un point de commande (ou unité de commande distante) d'un rideau motorisé.

Le but de l'invention est de fournir un système de commande remédiant aux inconvénients ci-dessus et améliorant les systèmes de commande connus de l'art antérieur. En particulier, l'invention fournit un système de commande simple et intuitif permettant de résoudre le problème de la localisation d'un point de commande d'un élément motorisé de couverture de fenêtre dans un environnement inconnu. L'invention porte encore sur un procédé de localisation mis en oeuvre par un tel système de commande.

Selon l'invention, le procédé permet de localiser une première unité de commande d'un actionneur de manoeuvre d'un élément de couverture de fenêtre. Il est caractérisé en ce qu'il comprend, suite à une étape de détection de présence d'un utilisateur, une étape d'activation d'un moyen de localisation de la première unité de commande.

L'étape de détection de présence de l'utilisateur peut comprendre une étape de détection d'une action de l'utilisateur sur l'élément de couverture, notamment une action manuelle d'ouverture ou de fermeture de l'utilisateur sur l'élément de couverture.

Différents modes de réalisation du procédé sont définis par les revendications 3 à 7.

Le système selon l'invention commande un élément de couverture de fenêtre. Il comprend un actionneur de manoeuvre de l'élément de couverture et une unité de commande de l'actionneur. Il comprend aussi des moyens matériels et/ou logiciels de mise en oeuvre du procédé défini précédemment.

Différents modes de réalisation du système sont définis par les revendications 9 à 15.

L'élément de couverture de fenêtre peut être un rideau.

L'invention sera mieux comprise à la lecture de la description qui va suivre, donnée uniquement à titre d'exemple et faite en se référant aux dessins annexés sur lesquels :
La figure 1 est un schéma d'un premier mode de réalisation d'un système de commande selon l'invention.
La figure 2 est un schéma d'un deuxième mode de réalisation d'un système de commande selon l'invention.
La figure 3 est un schéma d'un troisième mode de réalisation d'un système de commande selon l'invention.

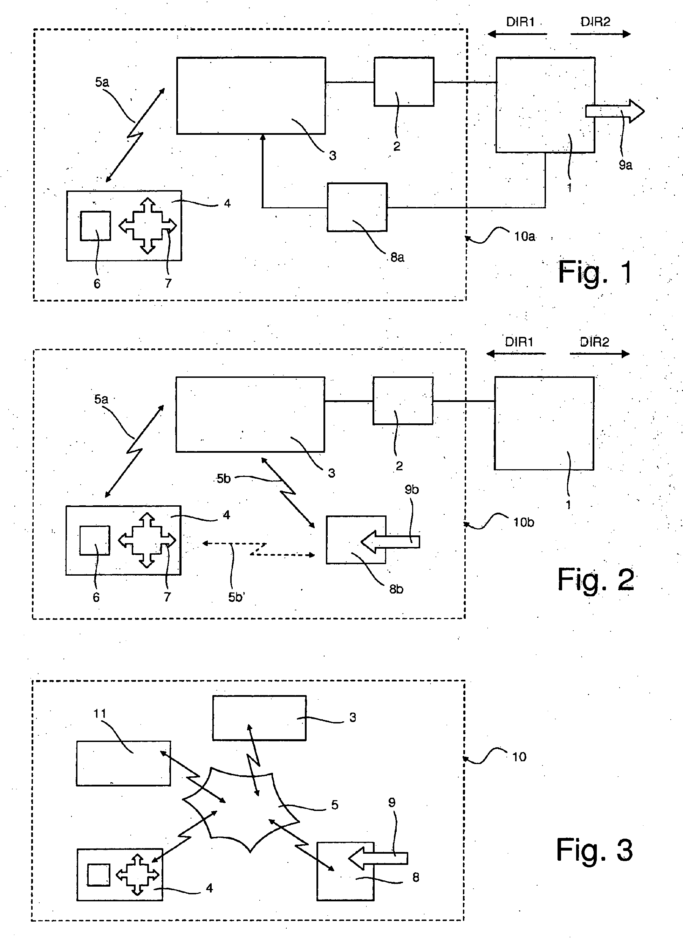

La figure 1 décrit un premier mode de réalisation d'un système de commande 10a selon l'invention. Le système de commande comprend un actionneur 2, comme un moteur, relié à un élément de couverture de fenêtre 1 pour entraîner celui-ci dans un sens d'ouverture DIR1 ou dans un sens de fermeture DIR2. L'élément de couverture peut être tout élément de fermeture, d'occultation, de protection solaire ou d'écran. On décrit par la suite un rideau en tant qu'élément de couverture. Le moteur est raccordé à un moyen de contrôle 3 pilotant l'alimentation du moteur dans un premier ou dans un deuxième sens ou son arrêt quand une condition d'arrêt est détectée, par exemple lors d'une arrivée en butée du rideau.

Le système de commande comprend également une unité de commande à distance 4 comprenant au moins une touche de commande 6 et communiquant à distance avec le moyen de contrôle par une première liaison 5a. L'activation de la touche de commande provoque le déplacement motorisé du rideau par l'émission d'un ordre sur la première liaison 5a, reçu et exécuté par le moyen de contrôle. Comme il est connu de l'art antérieur, l'ordre peut être un ordre de changement d'état (par exemple selon un cycle à 4 temps : ouverture - arrêt - fermeture - arrêt) ou peut être un ordre spécifique (ouverture - fermeture - arrêt) si l'unité de commande à distance comprend plusieurs touches de commande, par exemple 3 touches de commande, dédiées à chaque type d'ordre.

La première liaison 5a est de type sans fil, préférentiellement par ondes radiofréquences ou par rayonnement infrarouge. Alternativement, la première liaison 5a est de type filaire, par exemple par courants porteurs superposés au réseau électrique du local.

L'unité de commande à distance comprend également un moyen de localisation 7 tel un générateur de signal sensitif, par exemple de type visuel ou auditif. Ce moyen de localisation peut être constitué d'une diode électroluminescente ou d'un ensemble de diodes électroluminescentes, par exemple située au voisinage de la touche de commande, et/ou d'un moyen de rétro-éclairage de la touche de commande. Alternativement ou de manière complémentaire, le moyen de localisation peut comprendre un bruiteur, tel un buzzer. Dans tous les cas, le moyen de localisation permet d'émettre un signal sensitif vers l'utilisateur du local, afin que ce dernier repère sans ambiguïté la position de l'unité de commande.

Alternativement, la touche de commande est de type sensitif, à effleurement, sur un écran de type tablette. Le moyen de localisation comprend alors par exemple un clignotement du rétro-éclairage de l'écran ou une variation alternative des couleurs de l'écran.

Le système de commande comprend enfin un capteur de présence et/ou d'activité, éventuellement séparé de l'unité de commande à distance. Dans le premier mode de réalisation, ce capteur est un moyen de détection 8a d'une action manuelle sur le rideau, notamment une action manuelle d'ouverture ou de fermeture sur le rideau. Le capteur est raccordé à la fois au rideau et au moyen de contrôle. Lors d'une action 9a de traction du rideau, provoquée par l'utilisateur, une information émise par le capteur vers le moyen de contrôle est utilisée par le moyen de contrôle pour alimenter le moteur dans le sens de mouvement correspondant à l'action détectée.

Dans ce cas, le moyen de contrôle utilise la première liaison 5a pour provoquer l'activation du moyen de localisation, sur l'unité de commande à distance.

Ainsi, l'utilisateur provoque le mouvement désiré du rideau, mais il est en même temps averti de l'emplacement de l'unité de commande, voire de la touche de commande considérée si on associe un moyen de localisation à chaque touche de commande de l'unité de commande.

Ainsi, sans qu'il soit besoin d'explications complémentaires, l'utilisateur comprend qu'il pourra faire usage directement de l'unité de commande à distance pour des manoeuvres ultérieures du rideau, ce qui est pour lui plus confortable et ce qui évite une salissure du rideau provoquée par une répétition de tractions manuelles.

La figure 2 décrit un deuxième mode de réalisation d'un système de commande 10b selon l'invention. Les éléments inchangés par rapport au premier mode de réalisation sont désignés par une même référence et ne sont pas décrits à nouveau. Le capteur de présence et/ou d'activité 8b est cette fois un capteur de présence, apte à communiquer une information de présence de l'utilisateur dans le local. Le capteur est par exemple de type volumétrique, et apte à détecter la présence corporelle de l'utilisateur du local, ou encore de type RFID et apte à détecter la présence d'un badge porté par l'utilisateur du local, ou encore de type apte détecter l'insertion d'une carte dans un logement de carte disposé sur un support mural ou de table, ou enfin de type apte à détecter l'ouverture d'une porte.

Le capteur est raccordé au moyen de contrôle par une deuxième liaison 5b, par exemple de même type que la première liaison. Lors d'une activation du capteur par la présence 9b de l'utilisateur, cette information de présence est transmise au moyen de contrôle qui provoque l'exécution d'un déplacement motorisé du rideau, par exemple dans un sens d'ouverture du rideau.

Ainsi, dès l'entrée de l'utilisateur dans le local, il y a mouvement du rideau. Simultanément, le moyen de contrôle utilise la première liaison 5a pour provoquer l'activation du moyen de localisation, sur l'unité de commande à distance.

Alternativement, le capteur est raccordé à l'unité de commande à distance par une troisième liaison 5b', par exemple de même type que la première liaison. L'information de présence est alors utilisée par l'unité de commande à distance pour activer le moyen de localisation et provoquer l'émission d'un ordre de mouvement sur la première liaison.

Ainsi, l'utilisateur provoque cette fois indirectement, par sa seule présence, le mouvement du rideau, mais il est en même temps averti de l'emplacement de l'unité de commande. Il associe intuitivement le mouvement du rideau à l'unité de commande qui lui permettra, cette fois de manière volontaire, de provoquer les déplacements du rideau.

Ce mode de réalisation se prête à de nombreuses variantes d'exécution. Par exemple, il est possible de retarder le déplacement motorisé du rideau par rapport à l'activation du moyen de localisation.

De même, la durée d'activation du moyen de localisation est limitée. Elle peut être plus courte, ou au contraire plus longue que la durée du déplacement motorisé du rideau. Par exemple, elle peut précéder de 5 secondes le début du déplacement motorisé et se poursuivre 2 ou 3 secondes après la fin du déplacement motorisé.

La figure 3 décrit, de manière partielle mais plus générale, un troisième mode de réalisation 10 apte à s'adapter à plusieurs variantes de réalisation.

Dans ce mode de réalisation, le moyen de contrôle 3 et l'unité de commande à distance 4 communiquent sur un même réseau domotique 5, avec d'autres équipements. En particulier, un capteur 8 de présence et/ou d'activité comme décrit précédemment communique également sur le réseau domotique. Une unité de supervision 11 communique également sur le réseau domotique. Les échanges d'information peuvent avoir lieu entre les éléments du réseau domotique et l'unité de supervision. D'autres capteurs peuvent alors être associés à ceux décrits dans l'invention, par exemple un ou plusieurs capteurs d'ensoleillement, ou encore une horloge.

Préférentiellement, un déplacement motorisé provoqué par un capteur de présence n'a lieu que lors d'une première détection de présence, et ne se reproduit que lors d'un changement d'identifiant si le capteur de présence est apte à reconnaître un identifiant (de type RFID ou de type code sur une carte d'accès).

De même, on peut prévoir que l'ouverture du rideau n'a lieu que s'il fait jour. Dans le cas d'une arrivée nocturne de l'utilisateur, le moyen de contrôle maintient le rideau fermé (sauf action de l'utilisateur sur la touche de commande) par exemple jusqu'à détecter une double condition : à la fois une condition de mouvement (ouverture d'une porte par exemple, détection de mouvement) et une condition horaire (par exemple heure supérieure à 08:00).

On peut aussi prévoir, notamment lors d'une arrivée nocturne, qu'une simple détection de présence provoque l'activation du moyen de localisation, mais sans donner lieu à un déplacement motorisé du rideau. Dans ce cas, l'unité de commande affiche de préférence une instruction claire concernant sa fonction. Par exemple, les boutons de commande de l'élément de couverture sont revêtus ou associés à des pictogrammes explicites. Alternativement, figure sur l'unité de commande un pictogramme représentant un rideau. Il y a alors invitation implicite à utiliser l'unité de commande à distance, mais ce n'est qu'une incitation, signifiée pendant une durée limitée par l'activation du moyen de localisation. La généralisation de systèmes de commande selon l'invention habituera d'ailleurs les utilisateurs à associer l'émission d'un signal sensitif par le moyen de localisation avec la fonction « rideau motorisé », rendant ainsi de moins en moins nécessaire un déplacement motorisé du rideau automatique lors d'une première détection de présence, sauf lorsque ce déplacement contribue à manifester un signe de bienvenue à l'attention de l'utilisateur.

Dans le cas où l'unité de commande distante et l'unité de supervision constituent un seul élément, par exemple sous forme d'un ordinateur de type de tablette PC à usage multiple, on peut prévoir qu'un écran tactile de cet ordinateur est apte à afficher une icône de commande (ou des icônes de commande) du rideau, lors de l'activation du capteur de présence ou d'activité, et apte à activer un moyen de signalisation, comme mentionné plus haut (par exemple un rétro-éclairage clignotant tant que le doigt n'a pas effleuré l'écran) pour émettre le signal sensitif.

Le procédé de localisation et le système de commande selon l'invention se prêtent à de nombreuses variantes, en particulier :
- Le déplacement de l'élément de couverture faisant suite à une étape de détection de présence d'un utilisateur peut être commandé par une autre unité de commande telle qu'une unité de commande générale ou un support de clé comme un support de carte magnétique. Cette autre unité peut comprendre une touche de bienvenue commandant l'exécution d'un scénario. L'étape de détection de présence d'un utilisateur peut être assurée par cette autre unité de commande. Alternativement, une information de détection de présence peut être émise afin d'être reçue par cette autre unité de commande.
- La détection de présence peut être assuré par une détection de proximité d'un utilisateur, comme une détection d'une présence dans la pièce comprenant l'élément de couverture et/ou l'unité de commande 4.
- Le moyen de localisation peut être activé avant le déplacement de l'élément de couverture, en particulier avant le début du déplacement. Alternativement, le moyen de localisation peut être activé simultanément au déplacement de l'élément de couverture. Alternativement encore, le moyen de localisation peut être activé après le début du déplacement de l'élément de couverture.
- Le déplacement de l'élément de couverture faisant suite à une étape de détection de présence d'un utilisateur peut être un déplacement d'ouverture de l'élément de couverture.
- Le capteur de présence et/ou d'activité est de préférence apte à communiquer une information de présence au moyen de contrôle du moteur et/ou à l'unité de commande à distance 4 et/ou à une autre unité de commande, notamment une unité de supervision en relation avec le moyen de contrôle du moteur et/ou avec l'unité de commande à distance.
- Le capteur de présence et/ou d'activité communique de préférence avec l'unité de supervision pour transmettre une information de présence et/ou d'activité.

## Revendications

1. Procédé de localisation d'une première unité de commande (4) d'un actionneur (2) de manoeuvre d'un élément de couverture de fenêtre (1), **caractérisé en ce qu'**il comprend, suite à une étape de détection de présence d'un utilisateur, une étape d'activation d'un moyen de localisation (7) de la première unité de commande et **en ce que** l'étape de détection de présence de l'utilisateur comprend :
a) une étape de détection d'une action manuelle d'ouverture ou de fermeture de l'utilisateur sur l'élément de couverture ; ou
b) une étape de détection d'un élément RFID porté par l'utilisateur ; ou
c) une étape de détection de l'insertion d'une carte dans un support ; ou
d) une étape de détection de la manoeuvre d'une porte ; ou
e) une étape d'activation d'un détecteur de présence de type volumétrique.

2. Procédé de localisation selon la revendication 1, **caractérisé en ce que** l'étape d'activation du moyen de localisation de l'unité de commande a lieu lors d'un déplacement motorisé de l'élément de couverture, ce déplacement faisant suite à l'étape de détection de la présence de l'utilisateur.

3. Procédé de localisation selon la revendication précédente, **caractérisé en ce que** le déplacement motorisé de l'élément de couverture est commandé par une deuxième unité de commande.

4. Procédé de localisation selon la revendication 2 ou 3, **caractérisé en ce que** le déplacement motorisé de l'élément de couverture est une étape d'un scénario exécuté automatiquement.

5. Procédé de localisation selon l'une des revendications 2 à 4, **caractérisé en ce que** le déplacement motorisé est activé à l'échéance d'une première temporisation déclenchée par l'étape de détection de présence de l'utilisateur.

6. Procédé de localisation selon l'une des revendications 2 à 4, **caractérisé en ce que** le moyen de localisation est désactivé à l'échéance d'une deuxième temporisation.

7. Système de commande (10, 10a, 10b) d'un élément de couverture de fenêtre (1), comprenant un actionneur (2) de manoeuvre de l'élément de couverture et une unité de commande (4) de l'actionneur, **caractérisé en ce qu'**il comprend des moyens matériels et/ou logiciels de mise en oeuvre du procédé selon l'une des revendications précédentes, les moyens matériels et/ou logiciels de mise en oeuvre du procédé comprenant un moyen de localisation (7) de l'unité de commande et un moyen (8) de détection de présence d'un utilisateur.

8. Système de commande selon la revendication 7, **caractérisé en ce que** le moyen de détection de présence comprend un capteur (8, 8a, 8b) de présence, éventuellement séparé de la première unité de commande.

9. Système de commande selon la revendication 8, **caractérisé en ce que** le capteur de présence comprend un moyen de détection (8a) d'une action manuelle d'ouverture ou de fermeture de l'utilisateur sur l'élément de couverture.

10. Système de commande selon la revendication 9, **caractérisé en ce que** le moyen de détection d'une action manuelle est activable par une action de traction (9a) sur l'élément de couverture.

11. Système de commande selon l'une des revendications 8 à 10, **caractérisé en ce que** le capteur de présence comprend un élément RFID.

12. Système de commande selon l'une des revendications 8 à 11, **caractérisé en ce que** le capteur de présence comprend un capteur d'insertion d'une carte dans un support et/ou un capteur de manoeuvre d'une porte.

13. Système de commande selon l'une des revendications 8 à 12, **caractérisé en ce que** le capteur de présence comprend un élément de type volumétrique.

## Patentansprüche

1. Verfahren zur Lokalisierung einer ersten Steuereinheit (4) eines Stellantriebs (2) zur Betätigung eines Fensterabdeckelements (1), **dadurch gekennzeichnet, dass** es nach einem Schritt der Erfassung der Anwesenheit eines Benutzers einen Schritt der Aktivierung einer Lokalisierungseinrichtung (7) der ersten Steuereinheit enthält, und dass der Schritt der Erfassung der Anwesenheit des Benutzers enthält:
a) einen Schritt der Erfassung einer manuellen Öffnungs- oder Schließtätigkeit des Benutzers am Abdeckelement; oder
b) einen Schritt der Erfassung eines vom Benutzer getragenen RFID-Elements; oder
c) einen Schritt der Erfassung des Einführens einer Karte in einen Träger; oder
d) einen Schritt der Erfassung der Betätigung einer Tür; oder
e) einen Schritt der Aktivierung eines Anwesenheitssensors vom volumetrischen Typ.

2. Lokalisierungsverfahren nach Anspruch 1, **dadurch gekennzeichnet, dass** der Schritt der Aktivierung der Lokalisierungseinrichtung der Steuereinheit bei einer motorisierten Verschiebung des Abdeckelements stattfindet, wobei diese Verschiebung auf den Schritt der Erfassung der Anwesenheit des Benutzers folgt.

3. Lokalisierungsverfahren nach dem vorhergehenden Anspruch, **dadurch gekennzeichnet, dass** die motorisierte Verschiebung des Abdeckelements von einer zweiten Steuereinheit gesteuert wird.

4. Lokalisierungsverfahren nach Anspruch 2 oder 3, **dadurch gekennzeichnet, dass** die motorisierte Verschiebung des Abdeckelements ein Schritt eines automatisch ausgeführten Szenarios ist.

5. Lokalisierungsverfahren nach einem der Ansprüche 2 bis 4, **dadurch gekennzeichnet, dass** die motorisierte Verschiebung bei Ablauf einer ersten Verzögerung aktiviert wird, die durch den Schritt der Erfassung der Anwesenheit des Benutzers ausgelöst wird.

6. Lokalisierungsverfahren nach einem der Ansprüche 2 bis 4, **dadurch gekennzeichnet, dass** die Lokalisierungseinrichtung bei Ablauf einer zweiten Verzögerung deaktiviert wird.

7. Steuersystem (10, 10a, 10b) eines Fensterabdeckelements (1), das einen Stellantrieb (2) zur Betätigung des Abdeckelements und eine Steuereinheit (4) des Stellantriebs enthält, **dadurch gekennzeichnet, dass** es Hardware- und/oder Software-Einrichtungen zur Durchführung des Verfahrens nach einem der vorhergehenden Ansprüche enthält, wobei die Hardware- und/oder Software-Einrichtungen zur Durchführung des Verfahrens eine Lokalisierungseinrichtung (7) der Steuereinheit und eine Einrichtung (8) zur Erfassung der Anwesenheit eines Benutzers enthalten.

8. Steuersystem nach Anspruch 7, **dadurch gekennzeichnet, dass** die Anwesenheitserfassungseinrichtung einen Anwesenheitssensor (8, 8a, 8b) enthält, der ggf. von der ersten Steuereinheit getrennt ist.

9. Steuersystem nach Anspruch 8, **dadurch gekennzeichnet, dass** der Anwesenheitssensor eine Erfassungseinrichtung (8a) einer manuellen Öffnungs- oder Schließtätigkeit des Benutzers am Abdeckelement enthält.

10. Steuersystem nach Anspruch 9, **dadurch gekennzeichnet, dass** die Einrichtung zur Erfassung einer manuellen Tätigkeit durch eine Zugtätigkeit (9a) am Abdeckelement aktivierbar ist.

11. Steuersystem nach einem der Ansprüche 8 bis 10, **dadurch gekennzeichnet, dass** der Anwesenheitssensor ein RFID-Element enthält.

12. Steuersystem nach einem der Ansprüche 8 bis 11, **dadurch gekennzeichnet, dass** der Anwesenheitssensor einen Sensor für die Einführung einer Karte in einen Träger und/oder einen Betätigungssensor einer Tür enthält.

13. Steuersystem nach einem der Ansprüche 8 bis 12, **dadurch gekennzeichnet, dass** der Anwesenheitssensor ein Element vom volumetrischen Typ enthält.

## Claims

1. Method for locating a first control unit (4) for controlling an actuator (2) for operating a window covering element (1), **characterized in that** it comprises, following a step for detecting the presence of a user, a step for activating a means (7) for locating the first control unit and **in that** the step for detecting the presence of the user comprises :
a) a step for detecting a manual opening or closing action of the user on the covering element; or
b) a step for detecting a RFID element worn by the user; or
c) a step for detecting an insertion of a card in a card housing ; or
d) a step for detecting the manoeuvring of a door; or
e) a step for activating a presence detector of the volumetric type.

2. Location method according to Claim 1, **characterized in that** the step for activating the means for locating the control unit takes place during a motorized movement of the covering element, this movement following the step for detecting the presence of the user.

3. Location method according to the preceding claim, **characterized in that** the motorized movement of the covering element is controlled by a second control unit.

4. Location method according to Claim 2 or 3, **characterized in that** the motorized movement of the covering element is a step of a scenario executed automatically.

5. Location method according to one of Claims 2 to 4, **characterized in that** the motorized movement is activated on expiry of a first timeout triggered by the step for detecting the presence of the user.

6. Location method according to one of Claims 2 to 4, **characterized in that** the location means is deactivated on expiry of a second timeout.

7. Control system (10, 10a, 10b) for controlling a window covering element (1), comprising an actuator (2) for operating the covering element and a control unit (4) for controlling the actuator, **characterized in that** it comprises hardware and/or software means for applying the method according to one of the preceding claims, the hardware and/or software means for applying the method comprise a means (7) for locating the control unit and a means (8) for detecting the presence of a user.

8. Control system according to Claim 7, **characterized in that** the means for detecting the presence comprises a sensor (8, 8a, 8b) for sensing presence, possibly separated from the first control unit.

9. Control system according to Claim 8, **characterized in that** the sensor for sensing presence comprises a means (8a) for detecting an open or close manual action of the user on the covering element.

10. Control system according to Claim 9, **characterized in that** the means for detecting a manual action can be activated by an action (9a) of pulling on the covering element.

11. Control system according to one of Claims 8 to 10, **characterized in that** the sensor for sensing presence comprises an RFID element.

12. Control system according to one of Claims 8 to 11, **characterized in that** the sensor for sensing presence comprises a sensor for sensing insertion of a card into a device and/or a sensor for sensing operation of a door.

13. Control system according to one of Claims 8 to 12, **characterized in that** the sensor for sensing presence comprises an element of the volumetric type.
